# EUROPÄISCHE PATENTSCHRIFT

(11) **EP 0 855 430 B1**
(45) Veröffentlichungstag und Bekanntmachung des Hinweises auf die Patenterteilung: **18.01.2006**
(21) Anmeldenummer: 98101213.1
(22) Anmeldetag: 23.01.1998
(51) Int. Cl.: C08L 71/00, C08G 65/40

(54) **Thermoplastische Formmassen**
thermoplastic molding compositions
compositions de moulage thermoplastiques

(30) Priorität: 24.01.1997 DE 19702590
(43) Veröffentlichungstag der Anmeldung: 29.07.1998
(73) Patentinhaber: BASF Aktiengesellschaft, 67056 Ludwigshafen (DE)
(72) Erfinder: Weber, Martin, 67487 Maikammer (DE); Weiser-Elbl, Karin, 69198 Schriesheim (DE)
(74) Vertreter: Kinzebach, Werner

(56) Entgegenhaltungen:
- EP-A- 0 185 237
- EP-A- 0 235 885
- WO-A-96/41836
- US-A- 3 723 389
- KOCH T. ET AL: "Functional polysulphones from 4,4-bis(4-hydroxyphenyl)-pentanoic acid" MACROMOL. CHEM. PHYS. , Bd. 195, 1994, Seiten 1709-1717, XP000440333
- MACROMOLECULES , Bd. 28, Nr. 14, 3.Juli 1995, Seiten 4806-4809, XP002066336

## Beschreibung

Die Erfindung betrifft verbesserte, mit Carboxylgruppen polar modifizierte, thermoplastische Formmassen, die Verwendung dieser Formmassen zur Herstellung von Filmen, Fasern und Formkörpern, sowie die unter Verwendung der Formmassen hergestellten Gegenstände.

Thermoplastische Formmassen auf Basis von Polyarylenethern sind aus dem Stand der Technik bekannt. Derartige Formmassen zeichnen sich durch eine Reihe von interessanten Eigenschaften, wie gute Wärmeformbeständigkeit, gute mechanische Festigkeit und geringe Wasseraufnahme, aus. Für verschiedene Anwendungen ist es wünschenswert, derartige Polyarylenether-Formmassen sehr spezifisch zu modifizieren.

Zur Herstellung von mechanisch stark strapazierfähigen Formteilen kann z. B. die Zugabe von Verstärkungsstoffen erforderlich sein. Dabei stellt sich jedoch das Problem, daß verschiedene mechanische Eigenschaften der daraus hergestellten Formteile, wie z.B. Schlagzähigkeit, Zugfestigkeit, Reißdehnung und Schmelzestabilität nachteilig beeinflußt werden. Diesen nachteiligen Effekt erklärt man sich mit der mangelnden Verträglichkeit von Polyarylenetherkomponente und Verstärkungskomponente.

Aus dem Stand der Technik sind verschiedene Polyarylenether-Formmassen bekannt, welche modifizierte Polyarylenetherkomponenten enthalten. So beschreibt beispielsweise die EP-A-0 185 237 thermoplastische Formmassen auf Basis von Polyamid und Polyarylenethersulfon mit guten mechanischen Eigenschaften, wobei die Polyarylenethersulfonkomponente durch Sulfonierung mit Schwefeltrioxid, Umsetzung mit Carbonsäureanhydriden oder durch Einpolymerisierung von Sulfonsäure- und/oder Carboxylgruppen modifiziert wurde. Zur Einführung einer Carboxylgruppe kann z.B. Bis-4,4-(4-hydroxyphenyl)valeriansäure einpolymerisiert werden.

Fasern und Füllstoffe werden zwar als weiterer optionaler Bestandteil erwähnt, die damit verbundene Verschlechterung mechanischer Eigenschaften und Möglichkeiten, dem vorzubeugen, werden jedoch nicht diskutiert.

Zusammensetzungen mit verbesserter Klebeeigenschaft, welche eine funktionalisierte Polyarylenetherkomponente enthalten, sind beispielsweise aus der DE 41 10 460 bekannt. Die Funktionalisierung erfolgt beispielsweise durch radikalische Pfropfung einer reaktiven Verbindung, die neben einer Kohlenstoff-Kohlenstoff-Doppel-bzw. Dreifachbindung beispielsweise mehrere Carbonsäuregruppen umfaßt, auf die Polyarylenetherkette. Von Nachteil ist bei dieser Methode außerdem, daß die Funktionalität des Produktes nur begrenzt steuerbar ist. Als bevorzugte Beispiele für reaktive Verbindungen werden α,β-ungesättigte Dicarbonsäuren bzw. deren Anhydride, Di- und Monoester genannt. Faserverstärkte thermoplastische Formmassen und die mit der Einarbeitung von Verstärkungsmitteln verbundenen Probleme werden darin nicht beschrieben.

In gleicher Weise modifizierte Polyarylenether werden in der DE 41 14 455 als zusätzliche Komponente für thermoplastische Formmassen auf Basis von Polyamid und nicht-modifiziertem Polyarylenether beschrieben. Die daraus bekannten Formmassen können außerdem Verstärkungsstoffe enthalten. Probleme, die mit der Einarbeitung von faserförmigen Füllstoffen in diese Formmassen möglicherweise verbunden sind, werden in dieser Druckschrift nicht diskutiert.

Außerdem sind aus dem Stand der Technik modifizierte Polyarylenether bekannt, die Anhydridendgruppen aufweisen. So wird beispielsweise in der EP 613 916 die Anbindung der Anhydridgruppe an die Polyarylenetherkette über eine Estergruppe beschrieben.

Die Anbindung von Anhydridgruppen an Polyarylether kann auch, wie von C.L. Myers, ANTEC '92, 1992, 1, 1420, beschrieben, durch Umsetzung Amino-terminierter Polyarylether mit einer überschüssigen Menge an Dianhydrid erfolgen.

Des weiteren können Anhydridgruppen auch über eine Etherbrücke an die Polyarylenetherkette, wie in der PCT/EP 96/02990 beschrieben, fixiert werden. Die mit Anhydridgruppen modifizierten Polyarylethern als Haftvermittler hergestellten Formmassen weisen zwar gute mechanische Eigenschaften auf, die Schmelzestabilität der Produkte ist jedoch nicht befriedigend.

Eine erste Aufgabe der vorliegenden Erfindung ist somit die Bereitstellung verstärkter thermoplastischer Polyarylenether-Formmassen mit verbesserten mechanischen Eigenschaften.

Andere Anwendungen von Polyarylenethern, insbesondere im Bereich der Herstellung von Filmen und Fasern erfordern eine Verbesserung der Benetzbarkeit der eingesetzten Polyarylenether. Vor allem aus dem Bereich der Membranmaterialien sind vielfältige Untersuchungen zur Modifizierung von Polyarylenethern bekannt. So beschreibt die US 4,999,415 die Metallierung von Polysulfon in Lösung. Die nachfolgende Umsetzung mit Elektrophilen ermöglicht den Einbau verschiedenster funktioneller Gruppen wie auch Carboxyl-Gruppen. Aufgrund des hohen präparativen Aufwands dieser Methode (Inertgas, absolute Lösungsmittel) haben sich diese Produkte bisher jedoch nicht durchsetzen können.

Die elektrophile Substitution von Polyarylenethern wurde bereits beschrieben am Beispiel der Sulfonierung (B.C. Johnson et.al. J. Polym. Sci. A 22, 723-737 (1984), US 3,709,841), der Bromierung (US 4,999,415, M.D. Guiver et.al. Preprints, Speciality Poymers 88) und der Halomethylierung (A. Warshawsky et.al. J. Polym. Sci. A 28, 2885-2905 (1990)). Diese Reaktionen laufen jedoch nur unter drastischen Bedingungen ab und sind zum Teil mit Abbau und Vernetzungsreaktionen verbunden; das Abtrennen von Katalysatoren erfordert einen beträchtlichen Aufwand.

Eine weitere Aufgabe der vorliegenden Erfindung besteht somit in der Bereitstellung von thermoplastischen Polyarylenether-Formmassen, die eine verbesserte Benetzbarkeit besitzen und außerdem leichter herstellbar sind.

Überraschenderweise wurden die erfindungsgemäßen Aufgaben gelöst durch Bereitstellung von Formmassen, die zusätzlich zu einer Polyarylenetherkomponente einen modifizierten Polyarylenether mit einpolymerisierten, Carboxylgruppen tragenden Einheiten umfaßt.

Überraschenderweise wurde insbesondere festgestellt, daß bei Verwendung solcher modifizierter Polyarylenether als Verträglichkeitsvermittler thermoplastische Formmassen herstellbar sind, welche wesentlich verbesserte mechanische Eigenschaften, wie z.B. Schlagzähigkeit, Zugfestigkeit und Reißdehnung, aufweisen und außerdem eine deutlich verbesserte Schmelzestabilität besitzen.

Überraschenderweise wurde außerdem festgestellt, daß durch die erfindungsgemäße Verwendung modifizierter Polyarylenether die Benetzbarkeit von Polyarylenetherformmassen nicht nur leichter, sondern auch erheblich gezielter eingestellt werden kann. Außerdem ist deren Herstellung im Vergleich zum Stand der Technik signifikant verbessert.

Ein erster Gegenstand der vorliegenden Erfindung betrifft somit verstärkte thermoplastische Formmassen, bestehend aus:
A) mindestens einem Polyarylenether und
B) gegebenenfalls mindestens einem Füll- oder Verstärkungsstoff, dadurch gekennzeichnet, daß die Formmasse außerdem
C) mindestens einen modifizierten, Carboxylgruppen-haltigen Polyarylenether mit wiederkehrenden Strukturelementen der Formeln I und II 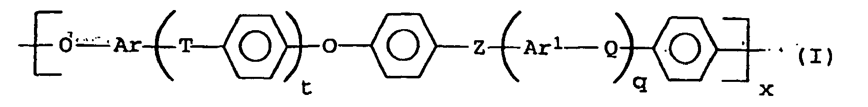 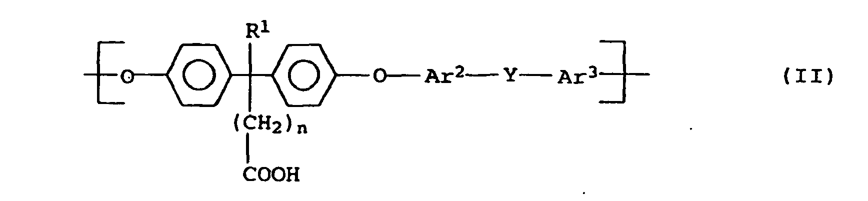 umfaßt, worin
   - x: für 0,5 oder 1 steht,
   - t und q: unabhängig voneinander für 0, 1, 2 oder 3 stehen,
   - n: für eine ganze Zahl von 0 bis 6 steht,
   - Q, T, Y. und Z: unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
   R^{a} und R^{b} unabhängig voneinander jeweils für ein Wasserstoffatom oder eine C₁-C₁₂-Alkylgruppe stehen und
   R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,

   mit der Maßgabe, daß mindestens eine der Gruppen T, Q und Z für -SO₂- oder C=O steht und, wenn t und q für 0 stehen, Z für -SO₂- oder C=O steht,
   - Ar, Ar¹, Ar² und Ar³: unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
   - R¹: für H, C₁-C₆-Alkyl, oder -(CH₂)ₙ-COOH steht: und

   wobei der modifizierte Polyarylenether (Komponente C) einen Anteil freie Säuregruppen enthaltender Einheiten der Formel II von 0,05 bis 25 mol-%, bestimmt durch ¹H-NMR, aufweist; und
D) gegebenenfalls bis 40 gew.-% übliche Zusätze. Erfindungsgemäße faserverstärkte Formmassen bestehen aus wenigstens einem Polyarylenether A), wenigstens einem Füll- oder Verstärkungsstoff B), als Verträglichkeitsvermittler für die Komponenten A) und B) mindestens einem modifizierten Polyarylenether C) sowie gegebenenfalls üblichen Zusätzen D).

Erfindungsgemäße Formmassen mit verbesserter Benetzbarkeit umfassen wenigstens einen Polyarylenether A), wenigstens einen modifizierten Polyarylenether C) und gegebenenfalls übliche Zusätze D).

Gemäß einer ersten bevorzugten Ausführungsform enthalten erfindungsgemäß faserverstärkte Formmassen, bezogen auf das Gesamtgewicht der Formmasse,
a) etwa 1 bis etwa 98 Gew.-%, vorzugsweise etwa 5 bis etwa 96,5 Gew.-%, insbesondere etwa 10 bis etwa 93 Gew.-% nicht-modifizierten Polyarylenether A),
b) etwa 1 bis etwa 50 Gew.-%, vorzugsweise etwa 2 bis etwa 45 Gew.-%, insbesondere etwa 5 bis etwa 40 Gew.-% Verstärkungsstoff B),
c) etwa 1 bis etwa 98 Gew.-%, vorzugsweise etwa 1,5 bis etwa 93 Gew.-%, insbesondere etwa 2 bis etwa 85 Gew.-% modifizierten Polyarylenether C) und
d) 0 bis etwa 30 Gew.-%, vorzugsweise 0 bis etwa 25 Gew.-%, insbesondere 0 bis etwa 20 Gew.-%, weiter übliche Zusatzstoffe D);
wobei sich die Komponenten A), B), C) und gegebenenfalls D) zu 100 Gew.-% ergänzen.

Gemäß einer zweiten bevorzugten Ausführungsform enthalten erfindungsgemäße Formmassen mit verbesserter Benetzbarkeit, bezogen auf das Gesamtgewicht der Formmasse:
a) etwa 1 bis etwa 99 Gew.-%, vorzugsweise etwa S bis etwa 95 Gew.-%, Polyarylenether A)
b) etwa 1 bis etwa 99 Gew.-%, vorzugsweise etwa 5 bis etwa 95 Gew.-% modifizierten Polyarylenether C) und
c) 0 bis etwa 35 Gew.-% übliche Zusatzstoffe D); wobei sich die Komponenten A), C) und gegebenenfalls D) zu 100 Gew.-% ergänzen.

In den erfindungsgemäß verwendeten funktionalisierten oder nichtfunktionalisierten Polyarylenetherkomponenten mit Einheiten der Formeln I und/oder II gelten die folgenden Bedeutungen:

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁-C₆-Alkylreste, wie Methyl, Ethyl, n-Propyl, i-Propyl, n-Butyl, sec.-Butyl, 2- oder 3-Methyl-pentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfassen insbesondere C₃-C₁₂-Cycloalkylreste, wie z.B. Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, Cyclohexyldimethyl, Cyclohexyltrimethyl, und dergleichen.

Beispiele für erfindungsgemäß brauchbare C₆-C₁₈-Arylengruppen sind Phenylengruppen, wie 1,2-, 1,3- und 1,4-Phenylen, Biphenylengruppen, Naphthylengruppen, wie z.B. 1,6-, 1,7-, 2,6- und 2,7-Naphthylen, sowie die von Anthracen, Phenanthren und Naphthacen abgeleiteten Brückengruppen.

Erfindungsgemäß brauchbare Polyarylenether (Komponente A) sind aufgebaut aus wiederkehrenden Einheiten der Formel I 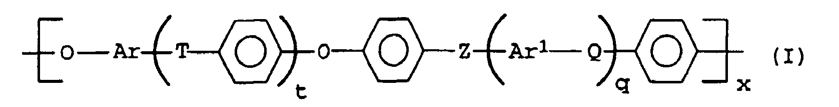
worin Ar, Ar¹, T, Z, Q, t, q und x die oben angegebenen Bedeutungen besitzen. Es können auch verschiedene Einheiten der Formel I statistisch oder in Blöcken verteilt im Polyarylenether vorliegen.

Die Herstellung erfindungsgemäß brauchbarer Polyarylenether A kann beispielsweise in Anlehnung an GB 1 152 035 oder US 4 870 153 erfolgen, worauf hiermit Bezug genommen wird. Geeignete Verfahrensbedingungen zur Synthese von Polyarylenethern sind beispielsweise in den EP-A-113 112 und EP-A-135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Beispiele für geeignete Polyarylenether A sind solche mit mindestens einer der folgenden wiederkehrenden Struktureinheiten I₁ bis I₂₉:
bei x=0,5 in Formel I: 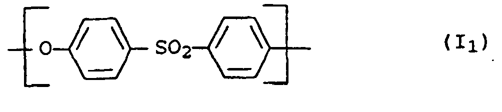
bei x=1 in Formel I: (I₁)

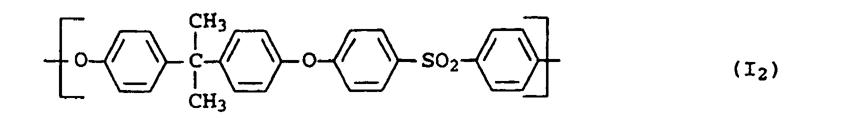

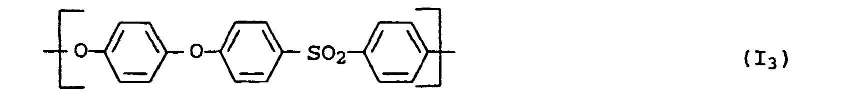

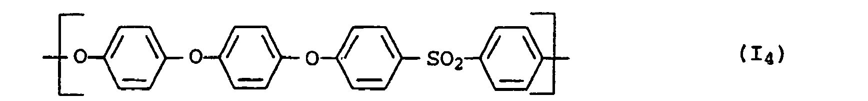

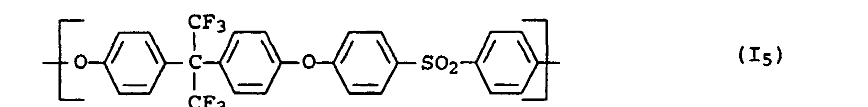

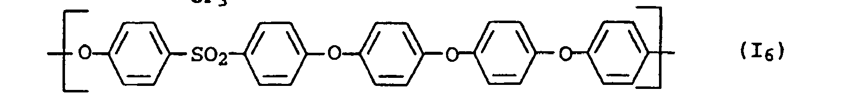

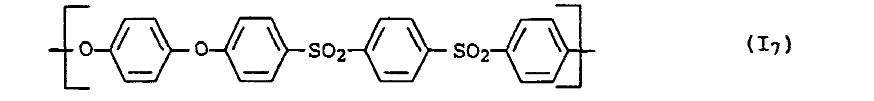

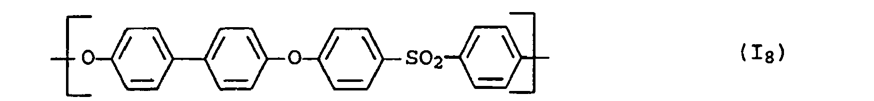

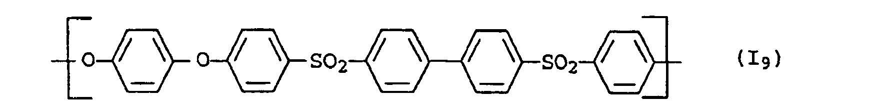

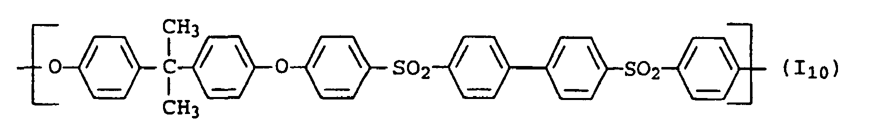

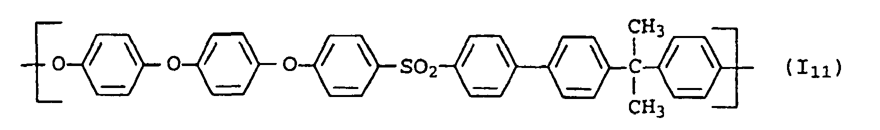

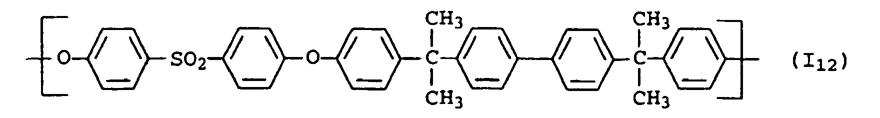

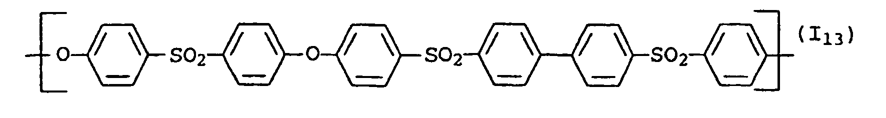

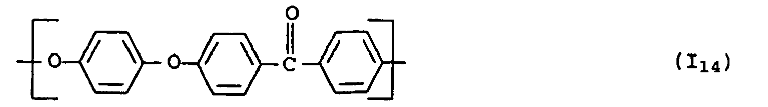

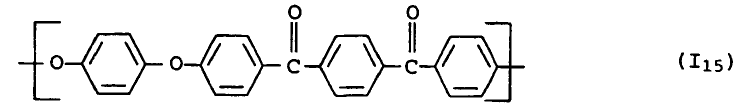

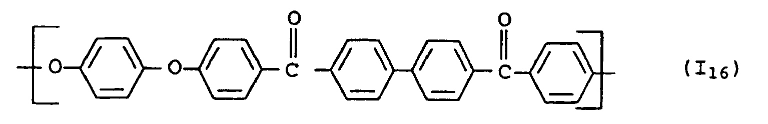

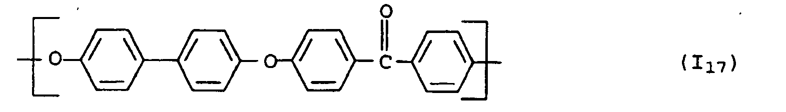

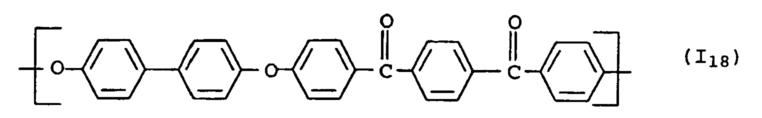

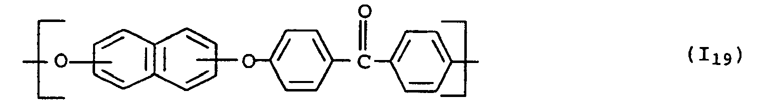

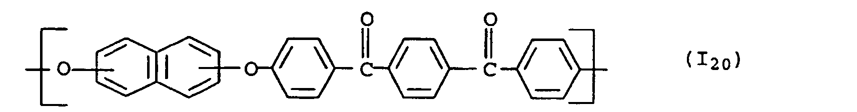

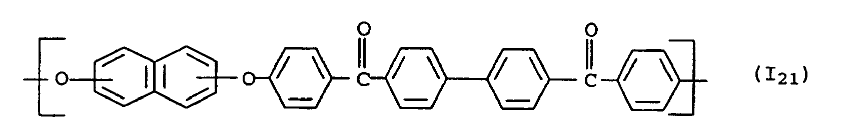

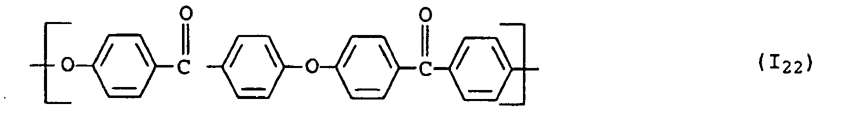

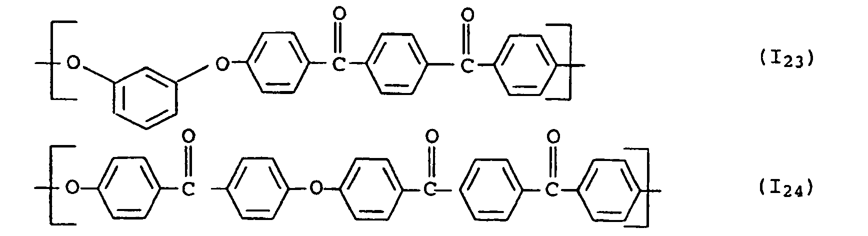

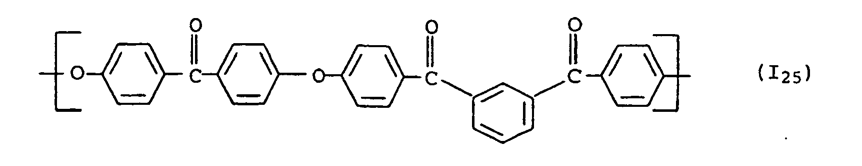

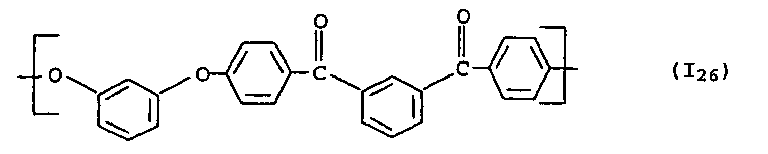

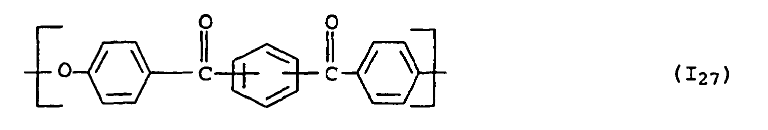

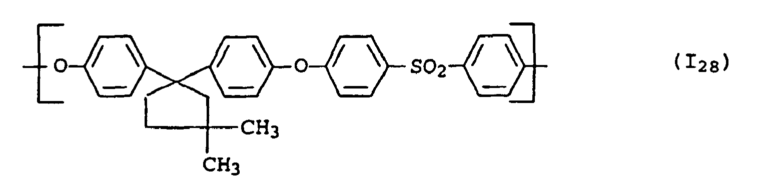

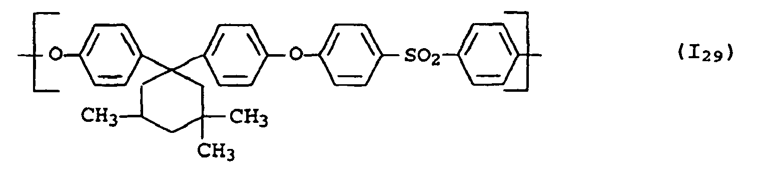

Als besonders bevorzugte Einheiten der Formel I sind zu nennen Einheiten der Formeln I₁ und I₂, welche einzeln oder im Gemisch vorliegen können.

Die Polyarylenether A können auch Co- oder Blockcopolymere sein, in denen Polyarylenethersegmente und Segmente von anderen thermoplastischen Polymeren, wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte Mₙ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

Als Komponente B enthalten die erfindungsgemäßen Formmassen faser- oder teilchenförmige Füll- oder Verstärkungsstoffe.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,05 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Die in den erfindungsgemäßen Formmassen als Verträglichkeitsvermittler verwendeten, seitenständig carboxylierten Polyarylenether (Komponente C) sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Chem. Phys. 195, 1709 (1994) beschriebenen Verfahren.

Die Polyarylenether sind demnach beispielsweise erhältlich durch Polykondensation von Verbindungen der allgemeinen Formel III 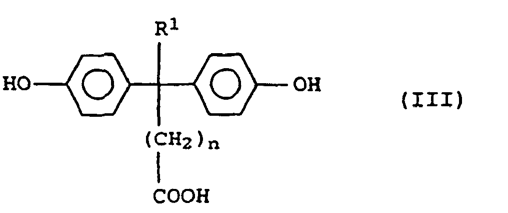
worin R¹ und n die oben angegebenen Bedeutungen besitzen mit wenigstens einer weiteren, z.B. chlorfunktionalisierten aromatischen Verbindung, wie z.B. Bis-(4-chlorphenyl)sulfon, und gegebenenfalls weiteren hydroxyfunktionalisierten Verbindungen, wie z.B. Bisphenol A und/oder Bisphenol S. Geeignete Reaktionspartner sind dem Fachmann allgemein bekannt.

Zur Herstellung der modifizierten Polyarylenether C können prinzipiell auch die für Polyarylenether A verwendeten Methoden eingesetzt werden, wobei die Lösungspolymerisation in dipolar aprotischen Lösungsmitteln unter Baseneinwirkung bevorzugt wird.

Obige Ausführungen zu bevorzugten Strukturelementen für Polyarylenether A gelten entsprechend für die modifizierten Polyarylenether C.

Beispiele für geeignete Strukturelemente II sind: 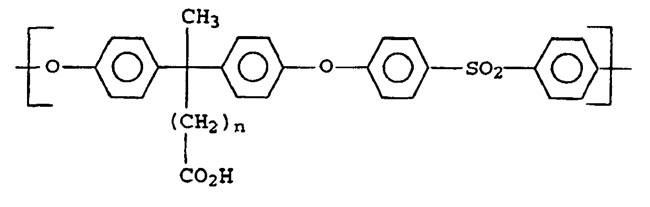 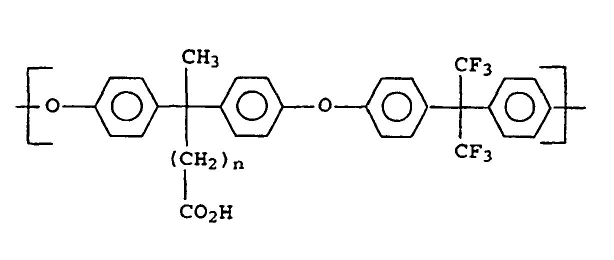 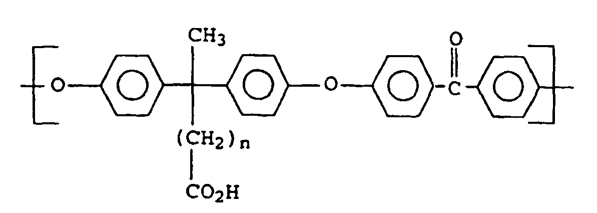
worin n jeweils für eine ganze Zahl von 0 bis 4 steht.

Die erfindungsgemäß verwendeten säuregruppenhaltigen Polyarylenether C weisen Viskositätszahlen von etwa 15 bis 80 ml/g auf (bestimmt in 1%iger NMP-Lösung bei 25°C). Der Anteil freier Säuregruppen in der Komponente C beträgt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

Als Komponente D können die erfindungsgemäßen Formmassen noch z.B. bis 40 Gew.-% weiterer Additive, wie Flammschutzmittel, Farbstoffe, Pigmente oder Stabilisatoren sowie Gleitmittel, enthalten.

Die erfindungsgemäßen Formmassen können nach an sich bekannten Verfahren, beispielsweise durch Extrusion, hergestellt werden.

Die thermoplastischen Formmassen können z.B. hergestellt werden, indem man die Ausgangskomponenten in üblichen Mischvorrichtungen wie Schneckenextrudern, vorzugsweise Zweischneckenextrudern, Brabender-Mühlen oder Banbury-Mühlen sowie Knetern mischt und anschließend extrudiert. Üblicherweise wird das Extrudat nach der Extrusion abgekühlt und zerkleinert.

Die Reihenfolge der Mischung der Komponenten kann variiert werden, so können zwei oder gegebenenfalls drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 400 °C vorzugsweise 290 bis 390 °C erforderlich.

Die füllstoffhaltigen Formmassen weisen sehr gute Zähigkeiten und Festigkeiten auf. Daneben zeichnen sie sich durch ihre sehr guten Verarbeitungs- und Hydrolysestabilitäten aus. Sie eignen sich daher beispielsweise zum Herstellen von Formteilen, die hohen mechanischen Belastungen oder chemischen Einflüssen ausgesetzt sind.

Die erfindungsgemäßen, nichtverstärkten Formmassen können auch in Form von Lösungen hergestellt und verarbeitet werden. Geeignete Lösungsmittel sind beispielsweise Dichlormethan, Chloroform, Chlorbenzol, ortho-Dichlorbenzol, Dimethylformamid, Dimethylsulfoxid, Dimethylacetamid, N-Methylpyrrolidon, Cyclohexanon und Tetrahydrofuran. Der Festgehalt geeigneter Polymerlösungen kann in einem weiteren Bereich schwanken, liegt aber in der Regel bei etwa 1 - 80 Gew.-%.

Die Erfindung wird nun anhand der folgenden nicht limitierenden Beispiele beschrieben.

### Beispiele

In den folgenden Herstellungsbeispielen wurde die Viskositätszahl der Produkte in 1%iger Lösung von N-Methylpyrrolidon bei 25°C bestimmt. Der Anteil der Einheiten mit Säuregruppen wurde wie bei I.W. Parsons et al., Polymer 34, 2836 (1993) beschrieben durch ¹H-NMR-Spektroskopie ermittelt.

### Herstellungsbeispiel 1:

### Carboxylierter Polyarylenether C₁

Unter Stickstoffatmosphäre wurden 5,742 kg Dichlordiphenylsulfon, 4,374 kg Bisphenol A und 112 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 1,2 mol-% bestimmt, die Viskositätszahl des Produkts betrug 38,1 ml/g.

### Herstellungsbeispiel 2:

### Carboxylierter Polyarylenether C₂

Unter Stickstoffatmosphäre wurden 5,742 kg Dichlordiphenylsulfon, 4,240 kg Bisphenol A und 280 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 3,1 mol-% bestimmt, die Viskositätszahl des Produkts betrug 37,1 ml/g.

### Herstellungsbeispiel 3:

### Carboxylierter Polyarylenether C₃

Unter Stickstoffatmosphäre wurden 5,742 kg Dichlordiphenylsulfon, 5,076 kg Dihydroxydiphenylsulfon und 305,8 g Bis-4,4-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels H-NMR zu 3,0 mol-% bestimmt, die Viskositätszahl des Produkts betrug 40,2 ml/g.

### Anwendungsbeispiele:

### Herstellung und Prüfung der Formmassen

a) Unter Verwendung der carboxylierten Polyarylenether C₁, C₂ und C₃ sowie der im folgenden aufgeführten Komponenten A₁, A₂ und B werden erfindungsgemäße faserverstärkte Formmassen (1 bis 5) hergestellt und mit üblichen Formmassen (V1 und V2) verglichen. Die Testergebnisse sind in Tabelle 1 zusammengefaßt.
b) Unter Verwendung des carboxylierten Polyarylenethers C₂ und der Komponente A₁ werden erfindungsgemäße unverstärkte Formmassen (6 bis 9) hergestellt und mit üblichen Formmassen (V3, V4) verglichen. Die Ergebnisse sind in Tabelle 2 zusammengefaßt.

### Komponente A₁

Als Polyarylenether A₁ wurde Ultrason S 2010 (Handelsprodukt der BASF AG) verwendet. Dieses Produkt ist charakterisiert durch eine Viskositätszahl von 56 ml/g, gemessen in 1%iger NMP-Lösung bei 25°C. Es umfaßt überwiegend Einheiten der Formel I₂.

### Komponente A₂

Als Polyarylenether A₂ wurde Ultrason E 1010 (Handelsprodukt der BASF AG) verwendet. Dieses Produkt ist charakterisiert durch eine Viskositätszahl von 49 ml/g, gemessen in 1%iger NMP-Lösung bei 25°C. Es umfaßt überwiegend Einheiten der Formel I₁.

### Komponente B

E-Glasfaser mit einem Faserdurchmesser von 10 µm und einer Polyurethanschlichte.

Die thermoplastischen Formmassen 1-5, V1 und V2 wurden durch Schmelzeextrusion auf einer ZSK 30 bei einer Gehäusetemperatur von 320°C (Polysulfon-Formmassen) bzw. 350°C (Polyethersulfon-Formmassen) konfektioniert. Die Verarbeitung zu den Prüfkörpern erfolgte bei den gleichen Massetemperaturen.

Die Zugfestigkeit und Reißdehnung der Formmassen 1-5, V1 und V2 wurde nach ISO 527 an Zugstäben ermittelt. Die Schlagzähigkeit der Produkte wurde an ISO-Stäben nach ISO 179 leu bestimmt. Zur Charakterisierung der Fließfähigkeiten der Produkte wurden die MVI-Werte nach DIN 53 735 bei 320°C und 21,6 kg Belastung ermittelt. Die Schmelzestabilität der Formmassen wurde durch Messung des MVI-Werts der Schmelze nach 4 bzw. 24 Minuten Standzeit bei einer Temperatur von 400°C bestimmt. Als Zahlenwert wird die während dieser Zeit eintretende Änderung, bezogen auf den Ausgangswert angegeben (in Prozent). Die Zusammensetzungen der Formmassen und die Ergebnisse der Prüfungen sind in Tabelle 1 aufgeführt.

**Tabelle 1**

| Formmasse Nr. | V1 | 1 | 2 | 3 | V2 | 4 | 5 |
|---|---|---|---|---|---|---|---|
| Komponente [Gew.-%] | | | | | | | |
| A₁ | 70 | 65 | 60 | 60 | - | - | - |
| A₂ | - | - | - | - | 70 | 65 | 60 |
| B | 30 | 30 | 30 | 30 | 30 | 30 | 30 |
| C₁ | - | 5 | 10 | - | - | - | - |
| C₂ | - | - | - | 10 | - | - | - |
| C₃ | - | - | - | - | - | 5 | 10 |
| Schlagzähigkeit [kJ/m²] | 29,7 | 46,2 | 50,1 | 52,1 | 43 | 48 | 51,8 |
| E-Modul [N/mm²] | 8600 | 8550 | 8400 | 8450 | 9350 | 9450 | 9500 |
| Zugfestigkeit [N/mm²] | 112 | 128 | 131 | 132 | 142 | 153 | 163 |
| Reißdehnung [%] | 1,9 | 2,7 | 3,1 | 2,7 | 2,0 | 2,3 | 2,2 |
| MVI [ml/10'] | 32 | 37 | 41 | 43 | 37 | 34 | 33 |
| Schmelzestabilität [%] | 21 | 16 | 14 | 13 | 27 | 25 | 22 |

Aus den Versuchen geht hervor, daß die erfindungsgemäßen glasfaserverstärkten Formmassen überraschenderweise neben günstigeren mechanischen Eigenschaften auch verbesserte Schmelzestabilitäten aufweisen.

Zur Bestimmung der Benetzbarkeit wurden jeweils 1g der Formmassen 6 bis 9, V3 und V4 in Dichlormethan gelöst, die Lösung wurde in eine Teflonschale gegeben. Nach Verdunsten des Lösungsmittels wurde der zurückbleibende Film zuerst 24 h bei Raumtemperatur, anschließend 12 h bei 130 °C im Vakuum getrocknet. Zur Charakterisierung der Benetzbarkeit wurde der Randwinkel mit Wasser als Medium bestimmt. Dazu wurde ein Wassertropfen auf die Oberfläche des Films aufgetragen. Nach 10 Sekunden wurde der Randwinkel gemäß Normvorschrift (EN 828) bestimmt.

**Tabelle 2**

| Film | V3 | 6 | 7 | 8 | 9 | V4 |
|---|---|---|---|---|---|---|
| Komponente [Gew.-%] | | | | | | |
| A₁ | 100 | 80 | 60 | 40 | 20 | - |
| C₂ | - | 20 | 40 | 60 | 80 | 100 |
| Randwinkel [°] | 78,6 | 72,1 | 67,4 | 64,1 | 60,1 | 58,1 |

Die Ergebnisse belegen, daß die erfindungsgemäßen Mischungen verbesserte Benetzbarkeit gegenüber Wasser aufweisen.

## Patentansprüche

1. Thermoplastische Formmasse, bestehend aus:
A) mindestens einem Polyarylenether
B) gegebenenfalls mindestens einem Füll- oder verstärkungsstoff,
**dadurch gekennzeichnet, daß** die Formmasse außerdem
C) mindestens einen modifizierten, Carboxylgruppen-haltigen Polyarylenether mit wiederkehrenden Strukturelementen der Formeln I und II 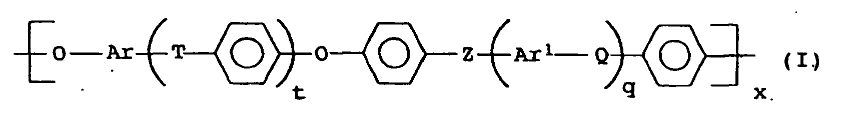 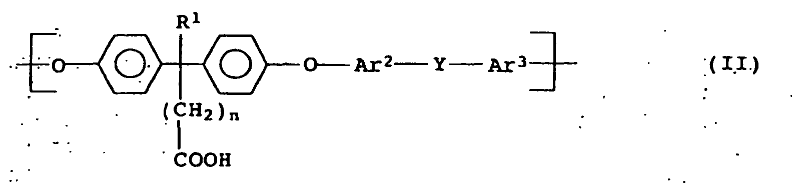 umfaßt,
worin
x für 0,5 oder 1 steht,
t und q unabhängig voneinander für 0, 1, 2 oder 3 stehen,
n für eine ganze Zahl von 0 bis 6 steht,
Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
R^{a} und R^{b} unabhängig voneinander jeweils für ein Wasserstoffatom oder eine C₁-C₁₂-Alkylgruppe, stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,
mit der Maßgabe, daß mindestens eine der Gruppen T, Q und Z für -SO₂- oder C=O steht und, wenn t und q für 0 stehen, Z für -SO₂- oder C=O steht,
Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxy-gruppen oder Halogenatomen substituiert sind,
R¹ für H, C₁-C₆-Alkyl, oder -(CH₂)ₙ-COOH steht; und
wobei der modifizierte Polyarylenether (Komponente C) einen Anteil freie Säuregruppen enthaltender Einheiten der Formel II von 0,05 bis 25 mol-%, bestimmt durch ¹H-NMR, aufweist;und
D) gegebenenfalls bis 40 Gew.-% übliche Zusätze.

2. Formmasse nach Anspruch 1, **dadurch gekennzeichnet, daß** der modifizierte Polyarylenether C) Strukturelemente der Formel II umfaßt, worin Ar² und Ar³ jeweils für 1,4-Phenylen, Y für SO₂, R¹ für C₁-C₆-Alkyl und n für eine ganze Zahl von 1 bis 6 steht.

3. Formmasse nach einem der vorherigen Ansprüche, **dadurch gekennzeichnet, daß** der Polyarylenether A) aus wiederkehrenden Strukturelementen obiger Formel I aufgebaut ist, wobei Ar, Ar¹, T., Q, Z, t und q die oben angegebenen Bedeutungen besitzen.

4. Formmasse nach einem der vorherigen Ansprüche, **dadurch gekennzeichnet, daß** die Einheiten der Formel I in den Komponenten A) und C) unabhängig voneinander ausgewählt sind unter Einheiten der Formel I₁ und I₂ 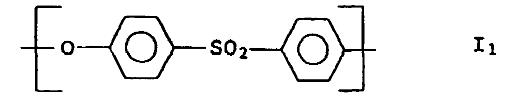 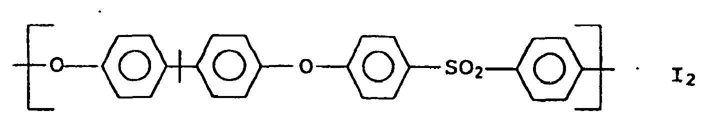 oder Gemischen davon.

5. Verstärkte Formmasse nach einem der vorherigen Ansprüche enthaltend, bezogen auf das Gesamtgewicht der Formmasse,
a) 1 bis 98 Gew.-% wenigstens eines Polyarylenethers A),
b) 1 bis 50 Gew.-% wenigstens eines faser- oder teilchenförmigen Füll- oder Verstärkungsstoffs B),
c) 1 bis 98 Gew.-% wenigstens eines modifizierten Polyarylenethers C) und
d) 0 bis 30 Gew.-% wenigstens eines weiteren üblichen Zusatzstoffs D);
wobei sich die Komponenten A), B), C) und gegebenenfalls D) zu 100 Gew.-% ergänzen.

6. Formmasse mit verbesserter Benetzbarkeit durch polare Substanzen enthaltend, bezogen auf das Gesamtgewicht der Formmasse,
a) 1 bis 99 Gew.-% wenigstens eines Polyarylenethers A)
b) 1 bis 99 Gew.-% wenigstens einer modifizierten Polyarylenethers C) und
c) 0 bis 35 Gew.-% wenigstens eines üblichen Zusatzstoffs D); wobei sich die Komponenten A), C) und gegebenenfalls D) zu 100 Gew.-% ergänzen.

7. Lösung einer Formmasse nach einem der Ansprüche 1 bis 6, enthaltend in einem organischen Lösungsmittel etwa 1 bis etwa 80 Gew.-% der Komponenten A), C) und gegebenenfalls D).

8. Verwendung von Formmassen nach einem der vorherigen Ansprüche zur Herstellung von Fasern, Filmen und Formkörpern.

9. Fasern, Filme und Formkörper, hergestellt unter Verwendung einer Formmasse nach einem der Ansprüche 1 bis 7.

## Claims

1. A thermoplastic molding composition composed of:
A) at least one polyarylene ether and
B) if appropriate, at least one filler or reinforcing material,
wherein the molding composition also comprises
C) at least one modified polyarylene ether which contains carboxyl groups and has recurring structural elements of the formulae I and II 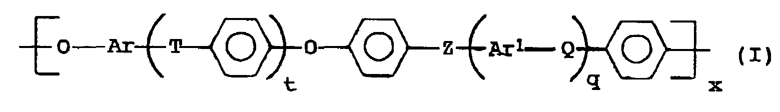 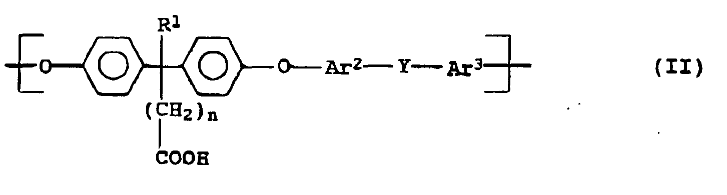
where
x is 0.5 or 1,
t and q, independently of one another, are 0, 1, 2 or 3,
n is an integer from 0 to 6,
Q, T, Y and Z, independently of one another, are respectively a chemical bond or a group selected from the class consisting of -O-, -S-, -SO₂-, S=O, C=O, -N=N-, -R^{a}C=CR^{b}- and -CR^{c}R^{d}-,
where
R^{a} and R^{b}, independently of one another, are respectively hydrogen or C₁-C₁₂-alkyl and
R^{c} and R^{d}, independently of one another, are respectively hydrogen or C₁-C₁₂-alkyl, C₁-C₁₂-alkoxy or C₆-C₁₈-aryl, R^{c} and R^{d}, independently of one another, being optionally substituted with fluorine and/or chlorine, or, if appropriate, together with the carbon atom to which they are bonded, form a C₃-C₁₂-cycloalkyl group, which is optionally substituted with one or more C₁-C₆-alkyl groups, with the proviso that at least one of the groups T, Q and Z is -SO₂- or C=O and, if t and q are 0, Z is -SO₂- or C=O,
Ar, Ar¹, Ar² and Ar³, independently of one another, are C₆-C₁₈-arylene, optionally substituted with C₁-C₁₂-alkyl, C₆-C₁₈-aryl, C₁-C₁₂-alkoxy or halogen,
R¹ is H, C₁-C₆-alkyl or -(CH₂)ₙ-COOH; and
where the modified polyarylene ether (component C) has a proportion, determined by ¹H-NMR, of units of the formula II comprising free acid groups of from 0.05 to 25 mol%; and
D) if appropriate, up to 40% by weight of conventional additives.

2. A molding composition according to claim 1, wherein the modified polyarylene ether C) comprises structural elements of the formula II, where Ar² and Ar³ are respectively 1,4-phenylene, Y is SO₂, R¹ is C₁-C₆-alkyl and n is an integer from 1 to 6.

3. A molding composition according to any of the preceding claims, wherein the polyarylene ether A) is constructed of recurring structural elements of the above formula I, where Ar, Ar¹, T, Q, Z, t and q are as defined above.

4. A molding composition according to any of the preceding claims, wherein the units of the formula I in components A) and C), independently of one another, are selected from the class consisting of units of the formulae I₁ and I₂ 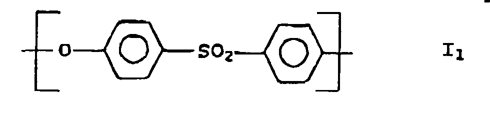 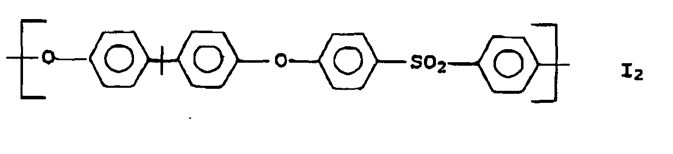 and mixtures of these.

5. A reinforced molding composition according to any of the preceding claims, which comprises, based on the total weight of the molding composition,
a) from 1 to 98% by weight of at least one polyarylene ether A),
b) from 1 to 50% by weight of at least one fibrous or particulate filler or reinforcing material B),
c) from 1 to 98% by weight of at least one modified polyarylene ether C) and
d) from 0 to 30% by weight of at least one other conventional additive D);
where components A), B), C) and, if appropriate, D) give a total of 100% by weight.

6. A molding composition with improved wettability given by polar substances and comprising, based on the total weight of the molding composition,
a) from 1 to 99% by weight of at least one polyarylene ether A),
b) from 1 to 99% by weight of at least one modified polyarylene ether C) and
c) from 0 to 5% by weight of at least one conventional additive D);
where components A), C) and, if appropriate, D) give a total of 100% by weight.

7. A solution of a molding composition according to any of claims 1 to 6 comprising, in an organic solvent, from about 1 to about 80% by weight of components A), C) and, if appropriate, D).

8. The use of a molding composition according to any of the preceding claims for producing fibers, films or shaped articles.

9. A fiber, a film and a shaped article, produced using a molding composition according to any of claims 1 to 7.

## Revendications

1. Composition de moulage thermoplastique, constituée
A) d'au moins un éther de polyarylène,
B) éventuellement d'au moins une matière de remplissage ou de renforcement,
**caractérisée en ce que** la Composition de moulage comporte en outre
C) au moins un éther de polyarylène modifié, contenant des groupes carboxyle et présentant des éléments structurels répétitifs des formules I et II : 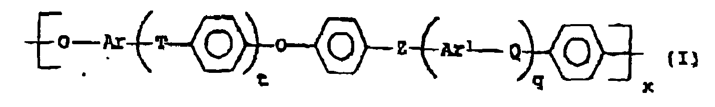 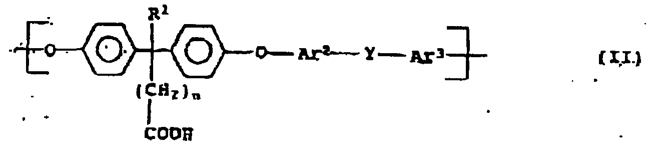
dans lesquelles
x vaut 0,5 ou 1,
t et q valent, indépendamment l'un de l'autre, 0, 1, 2 ou 3,
n représente un nombre entier de 0 à 6,
Q, T, Y et Z représentent chacun indépendamment une liaison chimique ou un groupe choisi parmi -O-, -S-, -SO₂-, S=O, C=O, -N=N-, -R^{a}C=CR^{b}- et -CR^{c}R^{d}-, où
R^{a} et R^{b} représentent chacun indépendamment un atome d'hydrogène ou un groupe alkyle en C₁-C₁₂, et
R^{c} et R^{d} représentent chacun indépendamment un atome d'hydrogène ou un groupe alkyle en C₁-C₁₂, alcoxy en C₁-C₁₂ ou aryle en C₆-C₁₈, R^{c} et R^{d} étant éventuellement substitués, indépendamment l'un de l'autre, par des atomes de fluor et/ou de chlore ou formant éventuellement conjointement avec l'atome de C, sur lequel ils sont fixés, un groupe cycloallsyle en C₃-C₁₂ qui éventuellement est substitué par un ou plusieurs groupes alkyle en C₁-C₆,
à la condition qu'au moins un des groupes T, Q et Z représente -SO₂- ou C=O et que, lorsque t et q valent 0, Z représente -SO₂- ou C=O,
Ar, Ar¹, Ar² et Ar³ représentent, indépendamment l'un de l'autre, des groupes arylène en C₆-C₁₈, ceux-ci étant éventuellement substitués par des groupes alkyle en C₁-C₁₂, aryle en C₆-C₁₈, alcoxy en C₁-C₁₂ ou des atomes d'halogène,
R¹ représente H, un groupe alkyle en C₁-C₆ ou - (CH₂)ₙ-COOH, et
l'éther de polyarylène modifié (composant C) présentant une fraction d'unités de la formule II contenant des groupes acides libres de 0,05 à 25 % molaires, déterminée par R.M.N.-¹H, et
D) éventuellement jusqu'à 40 % en poids d'additifs courants.

2. Composition de moulage suivant la revendication 1, **caractérisée en ce que** l'éther de polyarylène modifié C) comporte des éléments structurels de la formule II, dans laquelle Ar² et Ar³ représentent chacun du 1,4-phénylène, Y représente SO₂, R¹ de l'alkyle en C₁-C₆ et n un nombre entier de 1 à 6.

3. Composition de moulage suivant l'une des revendications précédentes, **caractérisée en ce que** l'éther de polyarylène A) est constitué d'éléments structurels répétitifs de la formule I ci-dessus, où Ar, Ar¹, T, Q, Z, t et q ont les significations indiquées précédemment.

4. Composition de moulage suivant l'une des revendications précédentes, **caractérisée en ce que** les unités de la formule I dans les composants A) et C) sont choisies, indépendamment l'une de l'autre, parmi les unités des formules I₁ et I₂ : 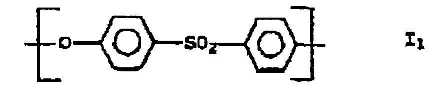 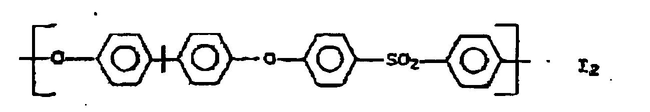 ou leurs mélanges.

5. Composition de moulage renforcée suivant l'une des revendications précédentes, contenant, par rapport au poids total de la Composition de moulage,
a) 1 à 98 % en poids d'au moins un éther de polyarylène A),
b) 1 à 50 % en poids d'au moins une matière de remplissage ou de renforcement B) en forme de fibres ou de particules,
c) 1 à 98 % en poids d'au moins un éther de polyarylène modifié C), et
d) 0 à 30 % en poids d'au moins un additif courant supplémentaire D),
les composants A), B), C) et éventuellement D) formant ensemble 100 % en poids.

6. Composition de moulage présentant une mouillabilité améliorée par des substances polaires, contenant, par rapport au poids total de la Composition de moulage,
a) 1 à 99 % en poids d'au moins un éther de polyarylène A),
b) 1 à 99 % en poids d'au moins un éther de polyarylène modifié C), et
c) 0 à 35 % en poids d'au moins un additif courant D),
les composants A), C) et éventuellement D) formant ensemble 100 % en poids.

7. Solution d'une Composition de moulage suivant l'une des revendications 1 à 6, contenant dans un solvant organique environ 1 à environ 80 % en poids des composants A), C) et éventuellement D).

8. Utilisation de Compositions de moulage suivant l'une des revendications précédentes, pour la fabrication de fibres, de films et de corps façonnés.

9. Fibres, films et corps façonnés, préparés par l'utilisation d'une composition de moulage suivant l'une des revendications 1 à 7.
